# EUROPEAN PATENT APPLICATION

(11) **EP 4 420 586 A1**
(43) Date of publication of application: **28.08.2024**
(21) Application number: 22882514.7
(22) Date of filing: 14.09.2022
(51) Int. Cl.: A47L 11/40

(54) **METHOD AND APPARATUS FOR CONTROLLING CLEANING DEVICE, AND CLEANING DEVICE AND STORAGE MEDIUM**

(30) Priority: 18.10.2021 CN 202122503365 U; 08.12.2021 CN 202111492870
(71) Applicant: Beijing Roborock Innovation Technology Co., Ltd., Beijing 102206 (CN)
(72) Inventor: WANG, Kaijing, Beijing 102206 (CN); LI, Xing, Beijing 102206 (CN); ZHOU, Yongfei, Beijing 102206 (CN)
(74) Representative: Studio Torta S.p.A.
(86) International application number: PCT/CN2022/118836
(87) International publication number: WO 2023/065903

(57) **Abstract**

A method and apparatus for controlling a cleaning device, and a cleaning device and a storage medium. The method for controlling a cleaning device comprises: on the basis of a trigger member being triggered, acquiring first detection information of a first detection member (S602); determining a first moving distance at least on the basis of the acquired first detection information (S604); after controlling a cleaning device to move back for the first moving distance, executing a first obstacle approaching operation according to the first detection information (S606); acquiring second detection information of a second detection member (S608); and according to the second detection information, controlling the cleaning device to execute an operation of travelling along an obstacle (S610). Therefore, the number of re-collisions between a cleaning device and an obstacle (200) can be reduced to the greatest possible extent, such that the cleaning device can quickly travel along the obstacle, and the problem of missing the sweeping of the part of the ground adjacent to the wall is alleviated.

## Description

### CROSS-REFERENCE TO RELATED APPLICATIONS

The present disclosure claims priority to Chinese Patent Application No. 202122503365.4, filed on October 18, 2021 and Chinese Patent Application No. 202111492870.1 filed on December 8, 2021, which are incorporated herein by reference in their entireties as a part of the present application.

### TECHNICAL FIELD

The present disclosure relates to the field of intelligent control technologies and, in particular, to a method and apparatus for controlling a cleaning device, the cleaning device and a storage medium, and a cleaning device for rebounding of a front bumper.

### BACKGROUND

A current cleaning device, such as a self-moving cleaning robot, can usually travel automatically in a certain region to be cleaned to complete a cleaning operation without a user's operation. During cleaning, the cleaning device will encounter an obstacle; and when moving along the obstacle, the cleaning device can clean a part of a surface to be cleaned adjacent to the obstacle.

However, cleaning devices, especially some non-circular cleaning devices, must have different characteristics from circular cleaning devices in machine behavior due to their special configurations. In the process of avoiding an obstacle or travelling along a wall, a collision sensing component of the non-circular cleaning device needs a corresponding structural component to better respond to triggering and rebounding of the collision sensing component.

### BRIEF SUMMARY

In view of this, embodiments of the present disclosure provide a method and apparatus for controlling a cleaning device, the cleaning device and a storage medium, which can reduce re-collision times of the cleaning device with an obstacle as much as possible, such that the cleaning device can quickly travel along the obstacle, thereby reducing a problem such as missing sweeping of a part of a ground adjacent to a wall.

The present disclosure further provides a cleaning device, which can optimize triggering and rebounding of a collision sensing component to some extent, and achieve sensitive response of a collision sensor and accurate alignment after rebounding.

According to embodiments of a first aspect of the present disclosure, a method for controlling a cleaning device is provided. The cleaning device includes a device body, and a trigger, a first detector and a second detector which are arranged on the device body, wherein the trigger is triggered when the cleaning device collides with an obstacle, the first detector is configured to sense an obstacle at the periphery of the device body, and the second detector is arranged on a side of the device body, and configured to sense an obstacle on the side of the device body. The control method includes:
acquiring first detection information of the first detector based on the trigger being triggered; determining a first movement distance at least based on the acquired first detection information; after controlling the cleaning device to move backward for the first movement distance, executing a first obstacle approaching operation according to the first detection information; acquiring second detection information of the second detector; and controlling the cleaning device to execute an operation of travelling along the obstacle according to the second detection information.

Further, the first detection information at least includes: a first included angle between the device body and the obstacle, a vertical distance between the device body and the obstacle, and a horizontal distance between the device body and a target end of the obstacle, and the target end of the obstacle is located in front of the cleaning device at a side distal from the second detector; and determining the first movement distance based on the acquired first detection information includes: determining the first movement distance according to the first included angle, the vertical distance between the device body and the obstacle, and the horizontal distance between the device body and the target end of the obstacle.

Further, executing the first obstacle approaching operation according to the first detection information includes:
determining a first rotation angle according to the first included angle; controlling the cleaning device to rotate by the first rotation angle to a side distal from the second detector; and controlling the cleaning device to move forward according to the horizontal distance between the device body and the target end of the obstacle.

Further, controlling the cleaning device to move forward according to the horizontal distance between the device body and the target end of the obstacle includes: controlling the cleaning device to move forward based on the horizontal distance between the device body and the target end of the obstacle being greater than or equal to a preset value; acquiring a second included angle between the device body at a current position and the obstacle based on the trigger being triggered again; determining a second rotation angle according to the second included angle; and controlling the cleaning device to rotate by the second rotation angle to the side distal from the second detector.

Further, determining the second rotation angle according to the second included angle specifically includes: determining the second rotation angle according to the second included angle and a set position of the second detector relative to the device body.

Further, controlling the cleaning device to move forward according to the horizontal distance between the device body and the target end of the obstacle includes:
based on the horizontal distance between the device body and the target end of the obstacle being less than a preset value, controlling the cleaning device to move to the side distal from the second detector at a first linear speed and a first angular speed, and controlling the cleaning device to execute an obstacle searching operation if the trigger is not triggered when a preset duration is reached.

Further, the method for controlling the cleaning device further includes: controlling the cleaning device to move backward by a first preset distance based on that the first detection information is not acquired, and executing an obstacle searching operation after the cleaning device is rotated by a second preset angle to the side distal from the second detector.

Further, the obstacle searching operation includes: controlling the cleaning device to move and rotate to a direction where the second detector is arranged at an obstacle searching linear speed and an obstacle searching angular speed until the trigger is triggered.

According to embodiments of a second aspect of the present disclosure, an apparatus for controlling a cleaning device is provided. The cleaning device includes a device body, and a trigger, a first detector and a second detector which are arranged on the device body, wherein the trigger is triggered when the cleaning device collides with an obstacle, the first detector is configured to sense an obstacle at a periphery of the device body, and the second detector is arranged on a side of the device body, and configured to sense an obstacle at the side of the device body; and the control apparatus includes:
a first acquiring module, configured to acquire first detection information of the first detector based on the trigger being triggered; a first determining module, configured to determine a first movement distance at least based on the acquired first detection information; a first processing module, configured to, after controlling the cleaning device to move backward for the first movement distance, execute a first obstacle approaching operation according to the first detection information; a second acquiring module, configured to acquire second detection information of the second detector; and a second processing module, configured to control the cleaning device to execute an operation of travelling along the obstacle according to the second detection information.

Further, the first detection information at least includes: a first included angle between the device body and the obstacle, a vertical distance between the device body and the obstacle, and a horizontal distance between the device body and a target end of the obstacle, and the target end of the obstacle is located in front of the cleaning device at a side distal from the second detector, wherein the first determining module includes: a first determining unit, configured to determine the first movement distance according to the first included angle, the vertical distance between the device body and the obstacle, and the horizontal distance between the device body and the target end of the obstacle.

Further, the first processing module includes:
a second determining unit, configured to determine a first rotation angle according to the first included angle; a first processing unit, configured to control the cleaning device to rotate by the first rotation angle to a side distal from the second detector; and a second processing unit, configured to control the cleaning device to move forward according to the horizontal distance between the device body and the target end of the obstacle.

Further, the second processing unit includes: a first processing subunit, configured to control the cleaning device to move forward based on the horizontal distance between the device body and the target end of the obstacle being greater than or equal to a preset value; a first acquiring submodule, configured to acquire a second included angle between the device body at a current position and the obstacle based on the trigger being triggered again; a first determining subunit, configured to determine a second rotation angle according to the second included angle; and a second processing subunit, configured to control the cleaning device to rotate by the second rotation angle to the side distal from the second detector.

Further, the first determining subunit is specifically configured to: determine the second rotation angle according to the second included angle and a set position of the second detector relative to the device body.

Further, the second processing unit includes: a third processing subunit, configured to, based on the horizontal distance between the device body and the target end of the obstacle being less than a preset value, control the cleaning device to move to the side distal from the second detector at a first linear speed and a first angular speed, and control the cleaning device to execute an obstacle searching operation if the trigger is not triggered when a preset duration is reached.

Further, the apparatus for controlling the cleaning device further includes: a third processing module, configured to control the cleaning device to move backward by a first preset distance based on that the first detection information is not acquired, and execute an obstacle searching operation after the cleaning device is rotated by a second preset angle to the side distal from the second detector.

Further, the obstacle searching operation includes: controlling the cleaning device to move and rotate to a direction where the second detector is arranged at an obstacle searching linear speed and an obstacle searching angular speed until the trigger is triggered.

According to embodiments of a third aspect of the present disclosure, a cleaning device is provided, and the cleaning device includes: a processor and a memory, wherein the memory is configured to store an operation instruction; and the processor is configured to execute the method for controlling the cleaning device according to any one of the above first aspect by calling the operation instruction.

According to embodiments of a fourth aspect of the present disclosure, a computer-readable storage medium storing a computer program thereon is provided, wherein the program, when executed by a processor, implements the method for controlling the cleaning device according to any one of the above first aspect.

According to embodiments of a fifth aspect of the present disclosure, a cleaning device is provided, and the cleaning device includes: a frame that is formed in such a way that a front part thereof is in a rectangular-like configuration and a rear part thereof is in a semicircular configuration;
a front bumper connected to the front part of the frame and movable relative to the frame; and a collision sensor/sensors arranged at a front end and/or two sides of the rectangular-like configuration of the front part of the frame, or arranged on an inner wall and/or an inner side wall of the front end of the front bumper. The cleaning device further includes at least one rebounding member connected to the frame and/or the front bumper, wherein when the front bumper is not triggered, a preset gap is formed between a contact portion of the rebounding member and an inner wall of the front bumper or the front part of the frame.

Further, the rebounding member includes an elastic arm; the front bumper, when being forced to move relative to the frame, overcomes an elastic force of the elastic arm; and the rebounding member provides a rebounding force for restoration of the front bumper.

Further, two ends of the elastic arm are provided with a restoring arm and a fixed arm, respectively; a displacement stroke of the restoring arm corresponds to a displacement stroke of the front bumper; and the rebounding member is connected to the frame and/or the front bumper by means of the fixed arm.

Further, the elastic arm and the restoring arm form an acute angle bend, and a top of the bend forms the contact portion.

Further, the other end of the restoring arm is provided with a restoring hook substantially vertical to the restoring arm, and the restoring hook cooperates with a corresponding position of the frame or the front bumper to limit a rebound stroke of the elastic arm.

Further, one end of the fixed arm is provided with a fixed hook, and the fixed hook cooperates with the fixed arm to fixedly connect the rebounding member to the corresponding position of the frame or the front bumper.

Further, the number of the rebounding members is two, and the rebounding members are symmetrically arranged at the front part of the frame or arranged on the inner wall of the front end of the front bumper.

Further, the collision sensors include a first front part collision sensor and a second front part collision sensor symmetrically arranged at the front part of the frame or on the inner wall of the front end of the front bumper, and a first side part collision sensor and a second side part collision sensor symmetrically arranged on two sides of the front part of the frame or the inner side walls of the front bumper, respectively.

Further, the collision sensors are all arranged near the front part of the frame or corners of the front bumper.

Further, the two rebounding members are further distal from the front part of the frame or corners of the front bumper relative to the collision sensors.

### BRIEF DESCRIPTION OF THE DRAWINGS

To describe the technical solutions in the embodiments of the present disclosure or in the prior art more clearly, the following briefly introduces the accompanying drawings required for describing the embodiments or the prior art. Apparently, the accompanying drawings in the following description show some embodiments of the present disclosure, and those of ordinary skill in the art may still derive other drawings from these accompanying drawings without creative efforts.
FIG. 1 is a schematic structural diagram of a cleaning device provided according to an embodiment of the present disclosure;
FIG. 2 is a schematic structural diagram of the embodiment shown in FIG. 1 from one perspective;
FIG. 3a is a schematic diagram that a right side of a buffer of a cleaning device provided according to an embodiment of the present disclosure collides with an obstacle;
FIG. 3b is a schematic diagram of the cleaning device retreating by a first movement distance based on a posture in FIG. 3a;
FIG. 4a is a schematic diagram that a left side of a buffer of a cleaning device provided according to an embodiment of the present disclosure collides with an obstacle;
FIG. 4b is a schematic diagram of the cleaning device retreating by a first movement distance based on a posture in FIG. 4a;
FIG. 4c is a schematic diagram of the cleaning device after rotating by a first rotation angle based on a posture in FIG. 4b;
FIG. 4d is a schematic diagram of the cleaning device moving forward based on a posture in FIG. 4c until it re-collides with an obstacle;
FIG. 4e is a schematic diagram of the cleaning device after rotating by a second rotation angle based on a posture in FIG. 4d;
FIG. 4f is a schematic diagram of the cleaning device travelling along an obstacle based on a posture in FIG. 4e;
FIG. 4g is a schematic diagram of the cleaning device rotating and travelling over a target entering obstacle position based on a posture in FIG. 4c;
FIG. 5a is a schematic diagram that a left side of a buffer of a cleaning device provided according to another embodiment of the present disclosure collides with an obstacle;
FIG. 5b is a schematic diagram of the cleaning device retreating by a second movement distance based on a posture in FIG. 5a;
FIG. 5c is a schematic diagram of the cleaning device after rotating by a second rotation angle based on a posture in FIG. 5b;
FIG. 5d is a schematic diagram of the cleaning device moving forward based on a posture in FIG. 5c until it re-collides with an obstacle;
FIG. 5e is a schematic diagram of the cleaning device retreating by a third movement distance based on a posture in FIG. 5d;
FIG. 5f is a schematic diagram of the cleaning device after rotating by a third rotation angle based on a posture in FIG. 5e;
FIG. 6 is a schematic flowchart of a method for controlling a cleaning device provided according to an embodiment of the present disclosure;
FIG. 7 is a schematic diagram of an electronic structure of a cleaning device provided according to an embodiment of the present disclosure;
FIG. 8 is a schematic block diagram of an apparatus for controlling a cleaning device provided according to an embodiment of the present disclosure;
FIG. 9 is an overall sectional view of a cleaning device provided according to an embodiment of the present disclosure;
FIG. 10 is a partial view of part A in the overall sectional view of the cleaning device provided according to the embodiment of the present disclosure;
FIG. 11 is an overall view of a cleaning device provided according to an embodiment of the present disclosure;
FIG. 12 is a first perspective view of a rebounding member provided according to an embodiment of the present disclosure;
FIG. 13 is a second perspective view of a rebounding member provided according to an embodiment of the present disclosure; and
FIG. 14 is a top view of a rebounding member provided according to an embodiment of the present disclosure.

Reference signs in the accompanying drawings: 11, first front part collision sensor; 12, second front part collision sensor; 13, first side part collision sensor; 14, second side part collision sensor; 2, rebounding member; 21, elastic arm; 22, contact portion; 23, restoring arm; 24, restoring hook; 25, fixed arm; 26, fixed hook; 3, front bumper; 100, cleaning device; 110, device body; 111, forward part; 112, rearward part; 120, sensing system; 121, position determining apparatus; 122, buffer; 130, driving system; 131, driving wheel; 132, driven wheel; 133, first driving wheel; 134, second driving wheel; 140, cleaning system; 141, dry-type cleaning system; 142, wet-type cleaning system; 143, side brush; 200, obstacle; 701, processing apparatus; 702, ROM; 703, RAM; 704, bus; 705, I/O interface; 706, input apparatus; 707, output apparatus; 708, storage apparatus; 709, communication apparatus; 800, control apparatus; 810, first acquiring module; 820, first determining module; 830, first processing module; 840, second acquiring module; and 850, second processing module.

### DETAILED DESCRIPTION

Embodiments of the present disclosure will be described in detail hereinafter. Examples of the embodiments are shown in the accompanying drawings, and the same or similar reference signs indicate the same or similar elements or elements having the same or similar functions throughout the accompanying drawings. The embodiments described below in combination with the accompanying drawings are exemplary and are only intended to explain the present disclosure, and should not be construed as limiting the present disclosure.

It can be understood by those skilled in the art that the singular forms "a", "an", "the" and "this" may also encompass plural forms, unless otherwise stated. It should be further understood that the expression "include" used in the Description of the present disclosure means the presence of the stated features, integers, steps, operations, elements and/or components, but could not preclude the presence or addition of one or more other features, integers, steps, operations, elements, components and/or groups thereof. It should be understood that when we refer to an element as being "connected" or "coupled" to another element, it can be directly connected or coupled to the another element, or an intermediate element can be present. Besides, "connected" or "coupled" as used herein may include either a wireless connection or a wireless coupling. The expression "and/or" as used herein includes all or any one and all combinations of one or more of relevant listed items.

For clearer descriptions of the objectives, technical solutions, and advantages of the present disclosure, the embodiments of the present disclosure are described in detail hereinafter with reference to the accompanying drawings.

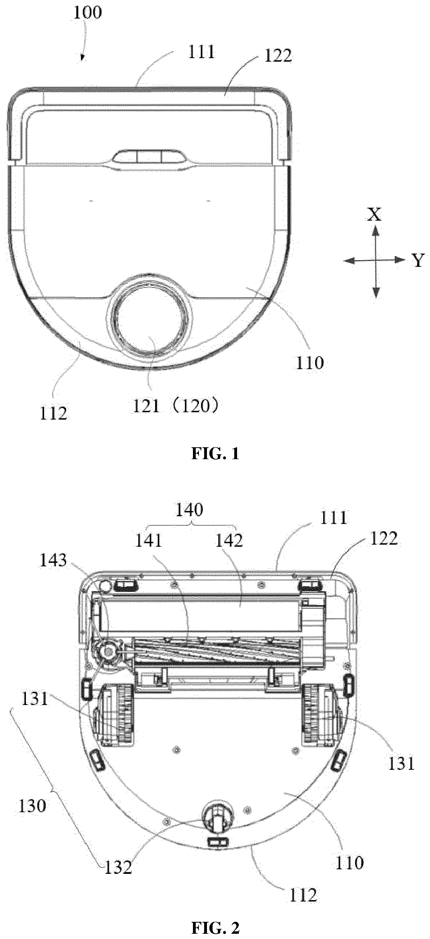

The embodiments of the present disclosure provide a possible application scenario. The application scenario includes a cleaning device, wherein the cleaning device includes a self-moving cleaning robot, such as a sweeping robot, a mopping robot, a vacuum cleaner, and a lawn mower. In some embodiments, as shown in FIGs. 1 and 2, by taking a household sweeping robot as an example for description, the sweeping robot can sweep according to a preset route or an automatically planned route in its working process, but will inevitably collide with an obstacle 200, such as a wall and a cabinet. Meanwhile, when moving along the wall with a shorter distance, the sweeping robot can clean a part of a ground adjacent to the wall, which is beneficial to improvement of the cleaning ability. Therefore, after the cleaning device collides with the obstacle 200, if the cleaning device can move along the wall quickly with a shorter distance, the cleaning efficiency of the cleaning device can be greatly improved, and a problem of missing sweeping of the part of the ground adjacent to the wall is effectively reduced, thereby improving the user's satisfaction in use.

In the embodiments provided by the present disclosure, as shown in FIGs. 1 and 2, the cleaning device includes a device body 110, a sensing system 120, a control system, a driving system 130, a cleaning system 140, an energy system and a human-computer interaction system.

The device body 110 includes a forward part 111 and a rearward part 112 and has an approximate D-shape having a square front and a circular back. That is, the forward part is approximately rectangular and the rearward part is approximately circular. In other words, the cleaning device may be a D-shaped sweeping robot. Of course, the device body 110 may also take other irregular shapes, such as a triangle and a rectangle.

As shown in FIG. 2, the sensing system 120 includes a trigger, a first detector and a second detector which are arranged on the device body. The trigger is triggered when the cleaning device collides with the obstacle 200. For example, the trigger may be a collision sensor, a proximity sensor or other structures that meet requirements, arranged on a buffer 122 of the forward part 111 of the device body 110.

The first detector is configured to sense the obstacle 200 at the periphery of the device body. For example, the first detector includes a position determining apparatus 121 arranged on the device body. The position determining apparatus 121 includes but is not limited to a camera and a laser distance sensor (LDS). It can be understood that the laser distance sensor is located at the uppermost end of the device body, may emit laser light with a 360-degree rotation, and can determine, based on the reflected laser light, a direction of the obstacle 200 and a distance relation between the obstacle 200 and the device body.

The second detector is arranged on a side of the device body, and configured to sense an obstacle 200 at a side of the device body 110. For example, the second detector may be a wall sensor arranged on the left or right side of the device body 110 or a smaller laser distance sensor, can sense the distance between a point on the side surface of the device body 110 and the device body 110, and is higher in accuracy. Specifically, when the second detector can detect information of the wall, the control system can control the cleaning device to move along the wall with a shorter distance from the wall.

Further, the sensing system 120 further includes a cliff sensor arranged at the lower part of the device body 110, and sensor apparatuses such as a magnetometer, an accelerometer, a gyroscope (Gyro) and odograph (ODO) arranged inside the device body 110; and the sensing system 120 is configured to provide various position information and motion state information of the device to the control system.

As shown in FIGs. 1 and 2, the forward part 111 of the device body 110 may carry the buffer 122. When the driving wheels 131 propel the robot to move on the ground in the cleaning process, the buffer 122 detects one or more occurrences in a travelling path of the cleaning device by means of a trigger arranged on the buffer 122, such as an infrared sensor. The cleaning device can control a module of the driving wheels 131 according to the occurrence detected by the buffer 122, such as an obstacle 200 or a wall, such that the cleaning device can respond to the occurrence by, for example, moving away from the obstacle 200, crossing the obstacle 200, and the like.

The control system is arranged on a main circuit board in the device body 110, and includes a computing processor, such as a central processing unit or an application processor, which communicates with a non-transitory memory, such as a hard disk, a flash memory or a random access memory. The application processor draws a real-time map of an environment of the robot by using a positioning algorithm, such as a simultaneous localization and mapping (SLAM), according to the information of the obstacle 200 fed back by the laser distance sensor. Moreover, combined with the distance information and speed information fed back by the sensor apparatuses such as the sensor, the cliff sensor, the magnetometer, the accelerometer, the Gyro and the odograph arranged on the buffer 122, a current working state, a current position, and a current posture and the like of the sweeping robot, for example, the robot crossing a doorsill 170, the robot being located at a cliff, or being stuck at the upper or lower part, a dust box being full and being taken up, and the like, can be comprehensively determined, and specific next action strategies will be given according to different situations, such that the working of the robot can be more in line with requirements of an owner, thereby providing a better user experience.

As shown in FIGs. 1 and 2, the driving system 130 may manipulate the robot to travel over the ground based on a driving command having distance and angle information (e.g., x, y and o components). The driving system 130 includes the driving wheels 131 and a driving module. The driving module may simultaneously control a left driving wheel and a right driving wheel. In order to control the movement of the device more accurately, the driving module preferably includes a left driving wheel module and a right driving wheel module. The left and right driving wheel modules are arranged symmetrically along a transversal axis defined by the body 110. For the robot to move more stably on the ground or have a higher movement ability, the robot may include one or more driven wheels 132, including but not limited to universal wheels. The driving module includes a driving motor and a control circuit for controlling the driving motor, and may also be connected to the odograph, and a circuit for measuring a driving current. The driving module may be detachably connected to the body 110 to facilitate assembly, disassembly and maintenance. The driving wheel 131 may have a biased drop-down suspension system that is movably fastened (e.g., rotatably attached) to the robot body 110, and that receives a spring bias biased downward and distal from the robot body 110. The spring bias allows the driving wheels 131 to maintain contact and traction with the ground with a certain landing force, while a cleaning element of the automatic cleaning device is also in contact with the ground with a certain pressure.

Further, the cleaning device may travel on the ground by means of various combinations of movements relative to the following three axes perpendicular to one another and defined by the device body, i.e., a front and rear axis X, a transversal axis Y, and a center vertical axis Z. A forward driving direction along the front and rear axis X is designated as "forward", and a rearward driving direction along the front and rear axis X is designated as "rearward". A direction of the transversal axis Y is substantially a direction extending between the right wheel and the left wheel of the robot along an axis center defined by a center point of the module of the driving wheels 131.

The cleaning device may rotate around the Y axis. It is referred to as "pitch up" when the forward part 111 of the automatic cleaning device is tilted upward and the rearward part 112 thereof is tilted downward, and it is referred to as "pitch down" when the forward part 111 of the automatic cleaning device is tilted downward and the rearward part 112 thereof is tilted upward. In addition, the robot may rotate around the Z axis. In a forward direction of the automatic cleaning device, it is referred to as "turn right" when the automatic cleaning device is tilted to the right of the X axis, and it is referred to as "turn left" when the automatic cleaning device is tilted to the left of the X axis. The X axis and the Y axis are shown by arrows in FIG. 1.

As shown in FIGs. 1 and 2, the cleaning system 140 includes a dry-type cleaning system. A main cleaning function of the dry-type cleaning system 141 is provided by a cleaning system composed of a rolling brush, a dust box, a fan, an air outlet, and connecting parts among them. The rolling brush has a certain interference with the ground sweeps up garbage on the ground and rolls up the garbage to the front of a dust suction inlet between the rolling brush and the dust box, and then the garbage is sucked into the dust box by air having a suction force, which is generated by the fan and passes through the dust box. The dry-type cleaning system 141 may further include a side brush 143 having a rotary shaft angled relative to the ground, for moving debris into a region of the rolling brush of the cleaning system 140. Further, the side brush 143 is located on a side of the device body 110 near the second detector. When the side of the cleaning device 10 where the second detector is arranged runs along a wall with a shorter distance from the wall, debris in a corner and gap between the ground and the wall can be moved to the region of the rolling brush of the cleaning system 140 by means of the side brush 143, such that the sweeping of a part of the ground adjacent to the wall is achieved, thereby ensuring excellent cleaning efficiency.

It can be understood that the cleaning system may also include a wet-type cleaning system. The wet-type cleaning system 142 may include a cleaning head, a driving unit, a water delivery mechanism, a liquid storage tank, and the like. The cleaning head may be arranged below the liquid storage tank, and cleaning liquid in the liquid storage tank is transported to the cleaning head by means of the water delivery mechanism, such that the cleaning head can perform wet-type cleaning on a plane to be cleaned. In other embodiments, the cleaning liquid in the liquid storage tank may also be directly sprayed on the plane to be cleaned, and the plane is cleaned by using the cleaning head to spread the cleaning liquid evenly. Of course, the cleaning head may also be a rolling brush with a water storage capacity per se. The cleaning head performs wet cleaning after it is supplied with water from a base station and leaves the base station. The cleaning head is configured to clean a surface to be cleaned, and a driving unit is configured to drive the cleaning head to basically reciprocate along a target surface, and the target surface is a part of the surface to be cleaned. The cleaning head reciprocates along the surface to be cleaned. A surface of the cleaning head in contact with the surface to be cleaned is provided with a piece of cleaning cloth or a cleaning plate, which generates high-frequency friction with the surface to be cleaned through the reciprocating motion, thereby removing stains on the surface to be cleaned.

The energy system includes a rechargeable battery, such as a hydrogen battery and a lithium battery. The rechargeable battery may be connected with a charging control circuit, a battery pack charging temperature detecting circuit and a battery undervoltage monitoring circuit. The charging control circuit, the battery pack charging temperature detecting circuit and the battery undervoltage monitoring circuit are then connected to a single-chip microcomputer control circuit. A host of the automatic cleaning device is connected to a charging pile by means of a charging electrode arranged on a side of or below a body of the automatic cleaning device for charging. If the exposed charging electrode is covered with dust, it will cause a plastic body around the electrode to melt and deform in a charging process due to an accumulative effect of electric charge, or even cause the charging electrode itself to be deformed, such that normal charging cannot be continued.

The human-computer interaction system includes buttons that are on a panel of the host and used by a user to select functions. The human-computer interaction system may further include a display screen and/or an indicator light and/or a horn, and the display screen, the indicator light and the horn present a current state or function options of the device to the user. The human-computer interaction system may further include a slave-client program. For a route navigation type automatic cleaning device, a slave-client may present a map of the environment where the device is located and a position of the device to the user, which may provide richer and more user-friendly function items to the user.

By the method for controlling the cleaning device provided by the embodiments of the present disclosure, if the cleaning device collides with the obstacle 200 such as a wall and a cabinet in a traveling process, the re-collision times of the cleaning device with the obstacle can be reduced as much as possible; and the cleaning device can move along the wall or the cabinet quickly with a shorter distance, such that the cleaning efficiency is improved, and the problem of missing sweeping of the part of the ground adjacent to the wall is effectively reduced, thereby improving the user experience in use. Details are as follows.

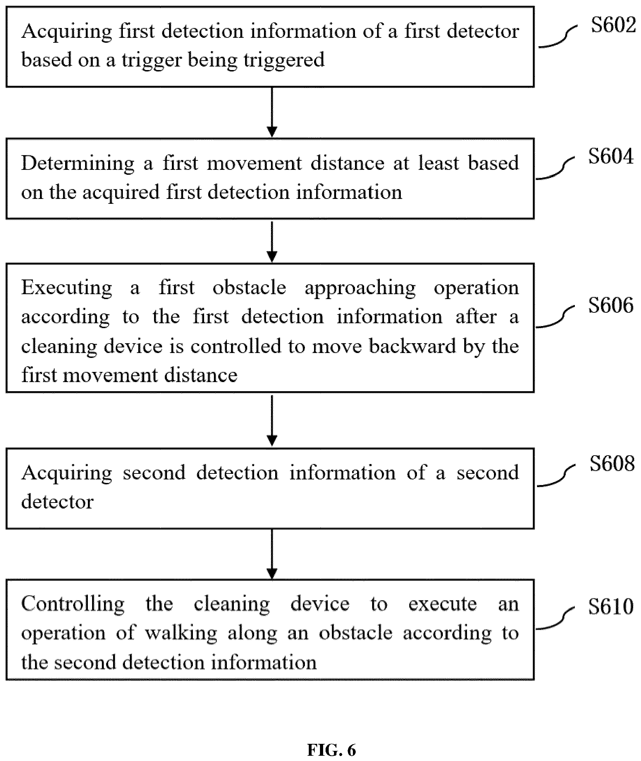

As one embodiment of the present disclosure, as shown in FIG. 6, a method for controlling a cleaning device is provided by the embodiment of the present disclosure, and includes the following method steps.

In step S602, first detection information of a first detector is acquired based on a trigger being triggered.

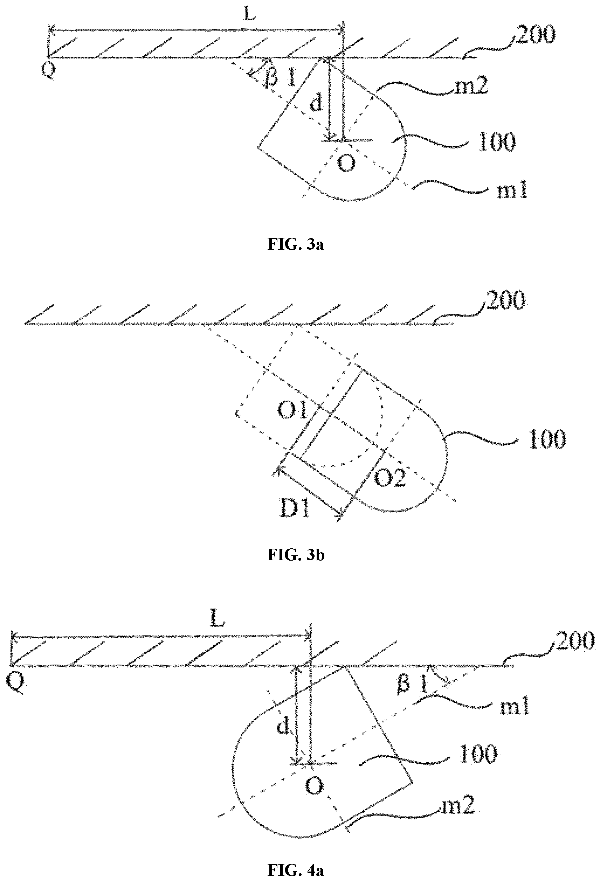

When the trigger is triggered, it means that a cleaning device 100 collides with an obstacle 200 in its advancing process. For example, when a buffer 122 of the cleaning device 100 collides with a wall, an action of a collision sensor is triggered, that is, the trigger is triggered, such that an approximate position of the wall relative to the cleaning device 100 and a collision position of a device body 110 of the cleaning device 100 can be known according to information of the trigger. As shown in FIG. 4a, when the right side of a forward part 111 of the cleaning device 100 collides with the wall, it can be known that the wall is located in the right front of the cleaning device 100 by means of the trigger. As shown in FIG. 3a, when the left side of the forward part 111 of the cleaning device 100 collides with the wall, it can be known that the wall is located in the left front of the cleaning device 100 by means of the trigger. When the middle position of the forward part 111 of the cleaning device 100 collides with the wall, it can be known that the wall is directly in front of the cleaning device 100 by means of the trigger.

Since the first detector is configured to sense information of the obstacle 200 at the periphery of the cleaning device 100 and the second detector is configured to sense information of the obstacle 200 at a side of the cleaning device 100, a detection range of the second detector is limited, and there is a case that the obstacle 200 is not within the detection range of the second detector, that is, a control system cannot acquire the second detection information, that is, the cleaning device 100 cannot execute an operation of travelling along the obstacle. Under normal conditions, by taking that the cleaning device 100 is a D-shaped cleaning device as an example, the buffer 122 includes a front part transverse segment and two side part segments. Generally, two collision sensors are arranged on the front part transverse segment, that is, two triggers are provided; and one collision sensor is arranged on each of the two side part segments, that is, each of the two side part segments is provided with one trigger. Therefore, when the cleaning device 100 collides with the obstacle 200, the position of the obstacle 200 relative to the device body 110 may be roughly determined by combined signals of one collision sensor or several collision sensors. That is, after the triggers are triggered, the relative positions of the cleaning device 100 and the obstacle 200 can be known by acquiring the detection information of the first detector, such that it is convenient to guide the cleaning device 100 to perform subsequent operations.

Specifically, the trigger may be a collision sensor, such as a light interrupter switch type sensor or a Hall type sensor. When the trigger of the cleaning device 100 is triggered, for a collision position of the cleaning device 100, collision position information can be sent to the control system by means of the collision sensor, so as to determine a position where the collision occurs on the cleaning device 100, and further confirm the orientation of the obstacle 200 relative to the cleaning device 100.

The first detector may be a laser distance sensor of the cleaning device 100. The laser distance sensor is located at the upper end of the device body 110, may emit laser light with 360-degree rotation, and can determine, according to the reflected laser light, the distance and direction of the obstacle 200 relative to the cleaning device 100, such that the first detection information can be determined according to the above information.

In step S604, a first movement distance is determined at least based on the acquired first detection information.

In step S606, a first obstacle approaching operation is executed according to the first detection information after the cleaning device is controlled to move backward for the first movement distance.

The first movement distance is determined at least according to the acquired first detection information, such that the first movement distance can match the relative positions of the obstacle 200 and the cleaning device 100. The cleaning device 100 is controlled to move backward for the first movement distance. In this way, the cleaning device 100 is separated from the obstacle 200, a triggering state of the trigger is released, and the smooth movement of the cleaning device 100 can be ensured. By executing the first obstacle approaching operation according to the first detection information, different first obstacle approaching operations can be executed according to different pieces of first detection information, such that the re-collision times of the cleaning device 100 with the obstacle 200 can be reduced as much as possible, and the problem of missing sweeping of the part of the ground adjacent to the wall is effectively reduced, which is beneficial to the improvement of cleaning efficiency and a cleaning effect.

It can be understood that the first movement distance may also be determined by combining structural parameters of the cleaning device 100 itself and the acquired first detection information. The structural parameters of the cleaning device 100 itself may include a positional relationship between the second detector and a geometric center of the device body 110 of the cleaning device 100, the distance between the geometric center of the device body 110 of the cleaning device 100 and the collision position, and the like.

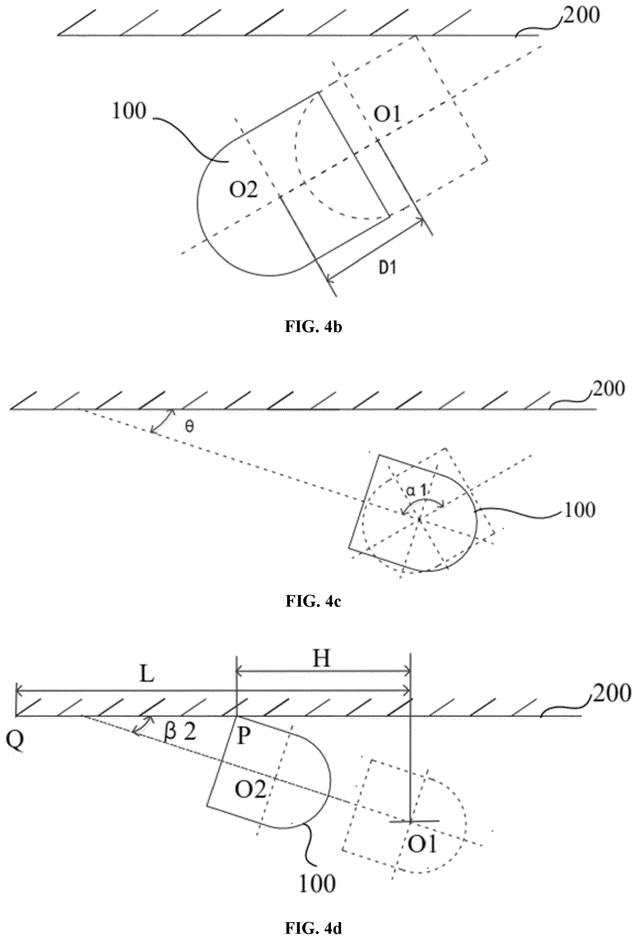

Controlling the cleaning device 100 to move backward refers to controlling the cleaning device 100 to move backward while a posture that the cleaning device 100 collides with the obstacle 200 is kept. In other words, in the backward movement process of the cleaning device 100, the cleaning device 100 moves backward in a straight line and does not rotate. Specifically, as shown in FIGs. 3b and 4b, FIG. 3b is a schematic diagram of the cleaning device 100 retreating by the first movement distance based on the posture in FIG. 3a, and FIG. 4b is a schematic diagram of the cleaning device 100 retreating by the first movement distance based on the posture in FIG. 4a. The first movement distance is shown by D1 in FIGs. 3b and 4b. In FIGs. 3b and 4b, O1 is a geometric center when the cleaning device 100 collides with the obstacle 200, and O2 is a geometric center after the cleaning device 100 moves backward by the first movement distance D 1.

In step S608, second detection information of the second detector is acquired.

In step S610, the cleaning device is controlled to execute an operation of travelling along the obstacle according to the second detection information.

After the cleaning device 100 executes the first obstacle approaching operation, the side of the cleaning device 100 provided with the second detector approaches the obstacle 200, such that the second detector can sense the obstacle 200. Therefore, by acquiring the second detection information of the second detector, the positional relationship between the cleaning device 100 and the obstacle 200, for example, the positional relationship between the cleaning device 100 and the wall, can be known more accurately; and further, the cleaning device 100 can be controlled to execute the operation of travelling along the obstacle according to the second detection information, for example, the cleaning device 100 may be controlled to move along the wall with a shorter distance from the wall. It can be understood that in this case, debris on the part of the ground adjacent to the wall can be moved into the region of the rolling brush of the cleaning system by means of the side brush 143, thereby achieving the sweeping of a region of the ground adjacent to the wall.

The first obstacle approaching operation refers to the operation that one side of the cleaning device approaches the obstacle, and the operation of travelling along the obstacle refers to the operation that the cleaning device keeps a certain distance from the obstacle and moves along the obstacle.

The second detector may be a smaller laser distance sensor arranged on a side of the device body 110. For example, the second detector is arranged on the right side of the device body 110, can sense the distance between a point on the obstacle 200 at the right side of the device body 110 and the device body 110, and is higher in accuracy. The first detector detects the distances between the obstacles 200 around the device body 110 and the device body 110, but is lower in accuracy. In other words, the first detector is mainly configured to find out where the wall is, the length of the wall and the relative positions between the wall and the device body 110, and is rotatably arranged on the device body 110. The second detector receives and transmits a reflected signal in a fixed direction from the side surface of the device body 110. When the device body 110 is parallel to the wall, it is still necessary to use a higher-precision distance sensor like the second detector to achieve millimeter-level travelling along the wall. That is, when the second detector can detect the information of the wall, the control system can control the cleaning device 100 to move along the wall with a shorter distance from the wall.

In other words, in the method for controlling the cleaning device 100 provided by the embodiments of the present disclosure, after the cleaning device 100 collides with the obstacle 200 in the advancing process and the action of the trigger is triggered, the positional relationship between the obstacle 200 and the cleaning device 100 can be known. Further, the first detection information of the first detector can be acquired to determine the first movement distance, and then, the cleaning device 100 is controlled to move backward for the first movement distance, such that the cleaning device 100 is separated from the obstacle 200, thereby ensuring the smooth movement of the cleaning device 100. Then, according to the difference pieces of the first detection information, different first obstacle approaching operations are executed, such that the re-collision times of the cleaning device 100 with the obstacle 200 can be reduced as much as possible. Meanwhile, the second detector can sense the obstacle 200, such that the cleaning device 100 can be controlled to execute the operation of travelling along the obstacle according to the second detection information, and the cleaning device 100 can quickly travel along the obstacle. Thus, the problem of missing sweeping of the part of the ground adjacent to the wall is reduced, thereby greatly improving the cleaning efficiency, and ensuring an excellent cleaning effect.

Further, the first detection information at least includes a first included angle between the device body and the obstacle, a vertical distance between the device body and the obstacle, and a horizontal distance between the device body and a target end of the obstacle. The target end of the obstacle is located in front of the cleaning device at a side distal from the second detector. That is, the target end of the obstacle is the end that the cleaning device reaches as planned by executing the operation of travelling along the obstacle. It can be understood that the first detection information may also be another parameter that meets a requirement and is configured to characterize a positional relationship between the obstacle and the device body at a position where the action of the trigger is triggered and the positional relationship between the target end of the obstacle and the device body.

As shown in FIGs. 3a and 4a, the first included angle β1 between the device body 110 and the obstacle 200 may be an included angle between a centerline m1 in the front and rear direction of the device body 110 and a projection of the surface of the obstacle 200 on the horizontal plane. The centerline in the front and rear direction of the device body 110 is shown as a straight line m1 in FIGs. 3a and 4a, and the first included angle is shown as β1.

The vertical distance d between the device body 110 and the obstacle 200 may be a vertical distance between a geometric center O of a projection of the device body 110 on the horizontal plane and the surface of the obstacle 200. The geometric center O of the projection of the device body 110 on the horizontal plane may be an intersection of the centerline m1 in the front and rear direction of the device body 110 and a centerline m2 in the left and right direction of the device body 110.

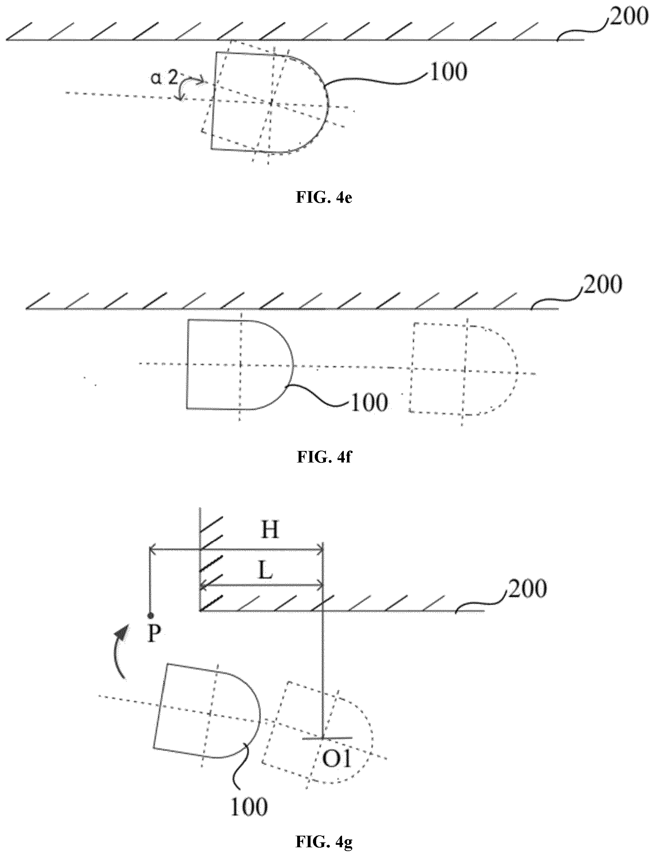

The horizontal distance L between the device body 110 and the target end Q of the obstacle 200 may be a horizontal distance between a horizontal projection of the geometric center O of the device body 110 on the obstacle 200 and the target end Q of the obstacle 200. The target end Q of the obstacle 200 is the end that the cleaning device 100 reaches as planned by executing the operation of travelling along the obstacle. For example, the target end of the obstacle 200 is represented by the letter Q. The target end Q of the obstacle 200 is located on the side distal from the second detector in front of the cleaning device 100. It can be understood that the horizontal distance L between the device body 110 and the target end Q of the obstacle 200 can determine whether the first obstacle approaching operation of the cleaning device 100 can be successfully completed. For example, if the horizontal distance L between the device body 110 and the target end Q of the obstacle 200 is shorter, as shown in FIG. 4g, there is a problem that the operation of travelling along the obstacle cannot be smoothly executed as the second detector on the side of the device body 110 cannot detect the wall due to the insufficient wall length caused by the fact that the first obstacle approaching operation is not completed, or the device body 110 cannot trigger the trigger again during the obstacle approaching operation, and as a result, the subsequent operation of travelling along the obstacle cannot be completed. Therefore, the horizontal distance L between the device body 110 and the target end Q of the obstacle 200 plays an important role in how to execute the obstacle approaching operation subsequently. Specifically, the horizontal distance L between the device body 110 and the target end Q of the obstacle 200 is shown as L in FIGs. 3a and 4a.

In the above embodiments, step S604 includes the following method steps.

In step S604-2, the first movement distance is determined according to the first included angle, the vertical distance between the device body and the obstacle, and the horizontal distance between the device body and the target end of the obstacle.

Since the first included angle β1, the vertical distance d between the device body 110 and the obstacle 200, and the horizontal distance L between the device body 110 and the target end Q of the obstacle 200 can reflect specific positional relationships between the cleaning device 100 and the obstacle 200 and between the cleaning device 100 and the target end Q of the obstacle 200, the first movement distance D1 is determined according to the first included angle β1, the vertical distance d between the device body 110 and the obstacle 200, and the horizontal distance L between the device body 110 and the target end Q of the obstacle 200. Thus, after the cleaning device 100 moves backward by the first movement distance D1, the possibility of triggering the action of the trigger again can be reduced in the process of executing the first obstacle approaching operation according to the first detection information. That is, the re-collision times of the cleaning device 100 with the obstacle 200 can be reduced as much as possible. Meanwhile, regions which are not swept are reduced, and the cleaning efficiency is improved.

Specifically, in the process of the backward movement of the cleaning device 100, data of the odograph of the driving wheels 131 may be utilized to ensure that the cleaning device 100 moves backward by the accurate distance in the current posture. That is, when the change information of the odograph matches the first movement distance D1 during the backward movement of the cleaning device 100, the cleaning device 100 is controlled to stop moving backward. In this case, it can be ensured that the backward movement distance of the cleaning device 100 is the first movement distance D1.

In some possible embodiments provided by the present disclosure, step S610 that the cleaning device is controlled to execute the operation of travelling along the obstacle according to the second detection information includes the following method steps.

In step S610-2, a first rotation angle is determined according to the first included angle.

In step S610-4, the cleaning device is controlled to rotate by the first rotation angle to the side distal from the second detector.

In step S610-6, the cleaning device is controlled to move forward according to the horizontal distance between the device body and the target end of the obstacle.

In this embodiment, since the first included angle β1 can characterize an inclined position of the cleaning device 100 relative to the obstacle 200, the first rotation angle α1 is determined according to the first included angle β1. Thus, the first rotation angle is related to a current inclined state of the cleaning device 100 relative to the obstacle 200. Then, as shown in FIG. 4c, the cleaning device 100 is controlled to rotate by the first rotation angle α1 to the side distal from the second detector. In this way, the advancing direction of the rotated cleaning device 100 and the obstacle 200 are kept within an excellent angle range. On the basis of ensuring that the cleaning device 100 can quickly move to the vicinity of the obstacle 200, the second detector can be oriented towards and as close as possible to the obstacle 200, such that the second detector can acquire the second detection information as soon as possible, thereby enabling the cleaning device 100 to execute the operation of travelling along the obstacle. FIG. 4c is a schematic diagram of the cleaning device 100 after rotating by the first rotation angle based on a posture in FIG. 4b, wherein the first rotation angle is shown as α1 in FIG. 4c.

Specifically, a preferred entering obstacle angle θ of the cleaning device 100 may be calculated based on the first included angle β1, the vertical distance d between the device body 110 and the obstacle 200, and the horizontal distance L between the device body 110 and the target end Q of the obstacle 200. The entering obstacle angle θ refers to an included angle between the centerline of the device body 110 of the cleaning device 100 in the front and rear direction and the projection of the surface of the obstacle 200 on the horizontal plane when the cleaning device 100 executes the first obstacle approaching operation, and is shown as θ in FIG. 4c. Under normal conditions, the preferred entering obstacle angle θ is less than 45 degrees. Then, the first rotation angle α1 may be determined according to the calculated preferred entering obstacle angle θ and the first included angle β1. That is, the first rotation angle α1 may be understood as a difference between the first included angle β1 and the preferred entering obstacle angle . The cleaning device 100 may be controlled to rotate in situ by the first rotation angle α1 to the side distal from the second detector by monitoring gyroscope data and controlling differential rotation of the left and right wheels.

In some possible embodiments provided by the present disclosure, step S610-6 includes the following method steps.

In step S610-6-11, the cleaning device is controlled to move forward based on the horizontal distance between the device body and the target end of the obstacle being greater than or equal to a preset value.

In step S610-6-12, a second included angle between the device body at a current position and the obstacle is acquired based on the trigger being triggered again.

In step S610-6-13, a second rotation angle is determined according to the second included angle.

In step S610-6-14, the cleaning device is controlled to rotate by the second rotation angle to the side distal from the second detector.

The preset value refers to a horizontal distance value that the second detector can detect the information of the obstacle 200 and the cleaning device 100 can be adjusted to a stable obstacle-following state after the cleaning device 100 can successfully complete the first obstacle approaching operation with respect to the obstacle 200. For example, a target entering obstacle position for the cleaning device 100 is set in an extending direction of the obstacle 200, and is represented by the letter P. The target entering obstacle position P is located on the side distal from the second detector in front of the cleaning device 100, and may be a position relative to the obstacle 200 when the cleaning device 100 is switched from the first obstacle approaching operation to the operation of travelling along the obstacle. That is, after the cleaning device 100 travels over the target entering obstacle position P, the cleaning device can be controlled to execute the operation of travelling along the obstacle according to the information of the obstacle detected by the second detector. The preset value is a horizontal distance between the projection of the geometric center of the device body 110 of the cleaning device 100 on the obstacle and the target entering obstacle position P and is shown as H in FIGs. 4d and 4g.

Specifically, the preset value may be set in the system in advance or calculated by the system according to the posture and position of the cleaning device 100 when it collides with the obstacle 200 and the structural parameters of the cleaning device 100 per se. For example, according to the first included angle between the device body 110 and the obstacle 200, the vertical distance between the device body 110 and the obstacle 200 and the horizontal distance between the device body 110 and the target end Q of the obstacle 200 in the first detection information, the distance between the geometric center of the device body 110 of the cleaning device 100 and a collision position, relative positions between the geometric center of the device body 110 and the second detector, and other parameters, the system may calculate the reasonable preset value to ensure that after the cleaning device 100 can successfully complete the first obstacle approaching operation with respect to the obstacle 200, the cleaning device can execute the operation of travelling along the obstacle when the second detector can detect the information of the obstacle 200.

In this embodiment, as shown in FIGs. 4d and 4e, when the horizontal distance L between the device body 110 and the target end Q of the obstacle 200 is greater than or equal to the preset value H, it means that the obstacle 200 is long enough, such that the cleaning device 100 can successfully complete the first obstacle approaching operation. That is, the second detector can detect the information of the obstacle after the cleaning device 100 executes the first obstacle approaching operation, and the cleaning device 100 can execute the obstacle following operation based on the obstacle 200. Therefore, as shown in FIGs. 4c and 4d, the cleaning device 100 is controlled to move forward. That is, the cleaning device 100 advances in a direction close to the obstacle 200 at a preferred entering obstacle angle θ. When the trigger is triggered again, it means that the cleaning device 100 collides with the obstacle 200 again. In this case, the second included angle β2 between the device body 110 at the current position and the obstacle 200 is acquired, wherein the second included angle β2 is an included angle between the centerline of the device body 110 at the current posture in the front and rear direction and the surface of the obstacle 200. Then, the second rotation angle α2 is determined according to the second included angle β2. As shown in FIG. 4e, the cleaning device 100 is controlled to rotate by the second angle α2 to the side distal from the second detector, such that the trigger is released. That is, the buffer 122 of the cleaning device 100 is separated from the obstacle 200. In addition, the second detector can sense the obstacle 200, that is, the second detection information is fed back by the second detector. Therefore, the control system can control the cleaning device 100 to travel along the obstacle according to the second detection information, as shown in FIG. 4f.

In the above embodiment, determining the second rotation angle according to the second included angle specifically includes:
determining the second rotation angle according to the second included angle and a set position of the second detector relative to the device body.

Since it is required to control the cleaning device 100 to execute the operation of travelling along the obstacle according to the second detection information of the second detector, if the second detector can sense the obstacle 200 as early as possible in a travelling process of the cleaning device 100, the cleaning device 100 can execute the operation of travelling along the obstacle as early as possible. However, the set positions of the second detector relative to the device body 110 are different, and thus, the cleaning device 100 is required to rotate by different angles at the same posture to enable the second detector to sense the obstacle 200. Therefore, the second rotation angle α2 is determined according to the second included angle β2 and the set position of the second detector relative to the device body 110, such that after the cleaning device 100 rotates by the second rotation angle α2 to the side distal from the second detector, the trigger is released, and meanwhile, the second detector can sense the obstacle 200. That is, the second detector feeds back the second detection information, thereby avoiding the need for two or more times of rotation to enable the trigger to be contacted. In addition, the second detector can sense the obstacle 200, such that the efficiency of the cleaning device 100 in executing the operation of travelling along the obstacle is greatly improved.

Specifically, the second detector is arranged on the right side of the device body 110, and the distance between the second detector and the front end of the device body 110 is a fixed value, for example, 9 cm to 15 cm. For example, the distance between the second detector and the front end of the device body 110 is 9 cm, 11 cm, 13 cm, 15 cm, or is other values that meet requirements. It can be understood that the distance between the second detector and the front end of the device body 110 may also be proportional to the size of the device body 110 in the front and rear direction. For example, the distance between the second detector and the front end of the device body 110 is 0.3 time, 0.4 time, or 0.6 time (or the other values that meet the requirement) the size of the device body 110 in the front and rear direction, which is not specifically limited in the present disclosure. This setting enables the second detector to sense the obstacle 200 only when the included angle between the cleaning device 100 and the obstacle 200 reaches a certain range. For example, when the distance between the second detector and the front end of the device body 110 is 11 cm, the second detector can sense the wall only when the included angle between the device body 110 and the wall is within a certain angle range, for example, within 27 degrees. Therefore, it is required to rotate the cleaning device 100 within this angle range as soon as possible to achieve the operation of travelling along the obstacle. Thus, the second rotation angle α2 is determined according to the second included angle β2 and 27 degrees, such that after the cleaning device 100 rotates by the second rotation angle α2 to the left side, the trigger is released, and the second detector can sense the wall.

In some possible embodiments provided by the present disclosure, step S610-6 includes the following method steps.

In S610-6-21, based on the horizontal distance between the device body and the target end of the obstacle being less than the preset value, the cleaning device is controlled to move to the side distal from the second detector at a first linear speed and a first angular speed; and the cleaning device is controlled to execute an obstacle searching operation if the trigger is not triggered when a preset duration is reached.

In this embodiment, as shown in FIG. 4g, when the horizontal distance L between the device body 110 and the target end Q of the obstacle 200 is less than the preset value H, that is, the obstacle 200 is shorter, the cleaning device 100 cannot successfully complete the first obstacle approaching operation. It can also be understood that with the combination of various sensors of the cleaning device 100, the cleaning device 100 cannot achieve the stable operation of travelling along the obstacle. Therefore, as shown in FIG. 4g, the cleaning device 100 is controlled to move to the side distal from the second detector at the first linear speed and the first angular speed. That is, the cleaning device 100 is controlled to approach the obstacle 200 obliquely as a whole, so as to increase the sweeping area to a greater extent, and try to achieve comprehensive sweeping. Such a travelling state is kept, if the trigger is not triggered when the preset duration is reached, it means that the forward part 111 of the cleaning device 100 travels over the obstacle 200; and then, the cleaning device 100 is controlled to execute the obstacle searching operation to find a new obstacle 200 to achieve the operation of travelling along the obstacle.

The preset duration may be 400 ms, 500 ms, 600 ms, or other durations that meet requirements. Setting the preset duration within a reasonable range can ensure that the forward part 112 of the cleaning device 100 can travel over the target end Q of the obstacle 200, for example, over a wall corner, such that the cleaning device will not collide with the wall corner in the obstacle searching operation of the cleaning device 100, thereby avoiding time waste.

Specifically, the first linear speed and the first angular speed may be preset values of the control system. For example, by taking the second detector being arranged on the right side of the device body 110 of the cleaning device 100 as an example, when the horizontal distance between the target entering obstacle position and the device body 110 is less than the preset value, the cleaning device 100 is controlled to rotate and move to the left at the first linear speed and the first angular speed.

In the above embodiment, the obstacle searching operation includes: controlling the cleaning device to move to the side where the second detector is arranged at an obstacle searching linear speed and an obstacle searching angular speed until the trigger is triggered.

In this embodiment, in order to enable the second detector to sense the obstacle 200 as early as possible to enable the cleaning device 100 to execute the operation of travelling along the obstacle to sweep a partial region of the ground adjacent to the wall, the cleaning device 100 should be controlled to rotate and move to the side where the second detector is arranged until the trigger is triggered, which indicates that the cleaning device 100 collides with the obstacle 200. That is, the obstacle 200 is found and the obstacle searching operation is completed.

The cleaning device 100 is controlled to rotate and move to the side where the second detector is arranged, such that the probability that the second detector senses the obstacle 200 can be increased in a process that the cleaning device 100 moves until the trigger is triggered, thereby facilitating the improvement of the efficiency of the cleaning device 100 in finding the obstacle 200 or executing the operation of travelling along the obstacle.

Specifically, the cleaning device 100 is controlled to move to the side where the second detector is arranged at the obstacle searching linear speed and the obstacle searching angular speed, wherein the obstacle searching linear speed and the obstacle searching angular speed may be preset values of the control system. By taking the second detector being arranged on the right side of the device body 110 of the cleaning device 100 as an example, as shown in FIG. 4g, when the horizontal distance between the device body 110 and the target end Q of the obstacle 200 is less than the preset value, the cleaning device 100 is controlled to rotate and move to the left side at the first linear speed and the first angular speed; and the trigger is not triggered when the preset time is reached, which means that after the trigger travels over the target entering obstacle position P, the cleaning device 100 is controlled to move to the right side at the obstacle searching linear speed and the obstacle searching angular speed, namely, rotating and advancing to the right side along the arrow in FIG. 4g. In this case, the cleaning device 100 will not collide with the target end Q of the obstacle 200, such that the second detector can sense a vertical wall connected to the wall that has just been travelled over, and further, the cleaning device 100 can quickly execute the operation of travelling along the obstacle, thereby achieving the sweeping of a partial region of the ground adjacent to the new wall.

In some possible implementation embodiments provided by the present disclosure, the control method further includes the following step.

In step S612, the cleaning device is controlled to move backward by a first preset distance based on that the first detection information is not acquired, and the cleaning device executes an obstacle searching operation after the cleaning device is rotated by a second preset angle to the side distal from the second detector.

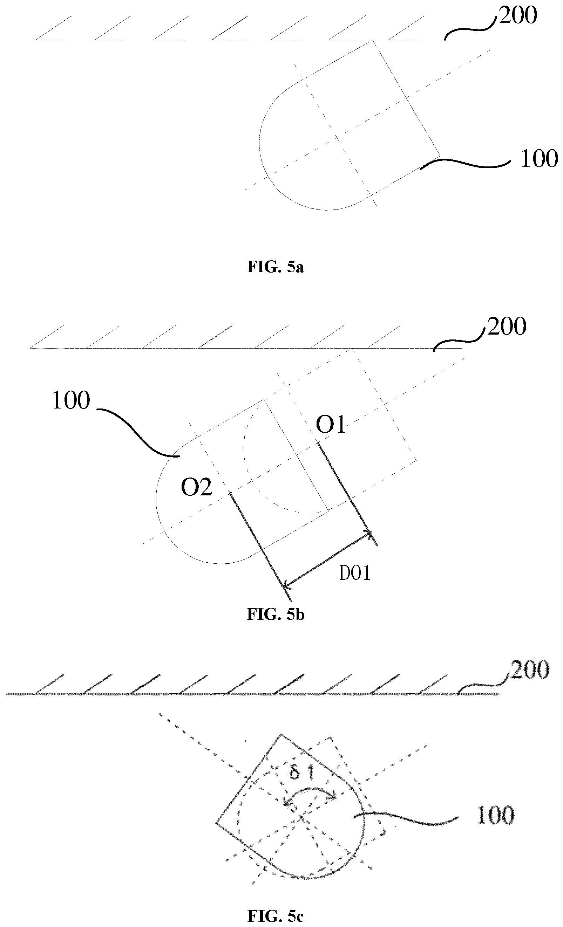

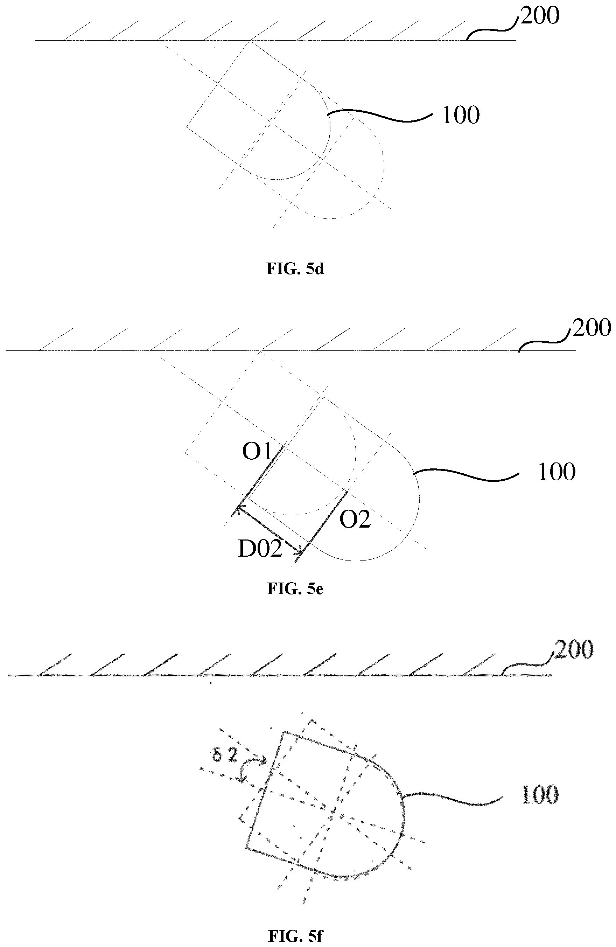

In this embodiment, as shown in FIG. 5a, when the trigger is triggered and the first detection information is not acquired, for example, after the cleaning device 100 collides with the obstacle 200, the first detector fails to sense since, for example, the obstacle 200 is too low to be sensed by the first detector; the second detector cannot receive a return signal having sufficient strength as the obstacle 200 is made of a light-absorbing material; or the like. In this case, as shown in FIG. 5b, the control system will control the cleaning device 100 to retreat by the first preset distance D01, such that the cleaning device 100 is separated from the obstacle 200, and the triggering state of the trigger is released, which can ensure the cleaning device 100 to move smoothly. Then, as shown in FIG. 5c, after the cleaning device 100 is controlled to rotate by a second preset angle to the side distal from the second detector δ1, the cleaning device 100 executes the obstacle searching operation to find a new obstacle 200. In this way, in a process that the cleaning device 100 moves until the trigger is triggered again, the probability that the second detector senses the obstacle 200 can be increased, thereby facilitating the improvement of the efficiency of the cleaning device 100 in finding the obstacle 200 or executing the operation of travelling along the obstacle.

The obstacle searching operation refers to an operation that the cleaning device 100 is controlled to rotate and move in the direction where the second detector is arranged until the trigger is triggered. For example, the cleaning device 100 is controlled to move to the side where the second detector is arranged at the obstacle searching linear speed and the obstacle searching angular speed until the trigger is triggered due to the collision of the cleaning device 100 with the obstacle 200, which indicates that the cleaning device 100 has found an obstacle 200 again. This obstacle 200 may be used as a reference for the cleaning device 100 when the cleaning device 100 executes the operation of travelling along the obstacle. That is, the cleaning device 100 can execute the operation of travelling along the obstacle once the second detector senses the obstacle 200.

The second preset angle δ1 may be a preset value of the control system. After the cleaning device 100 is controlled to move backward by the first preset distance D01, the cleaning device 100 is rotated by the second preset angle δ1 to the side distal from the second detector, which can avoid the situation that the first detector still cannot sense the obstacle 200 after the cleaning device 100 moves forward again in the current posture and collides with the obstacle 200. By controlling the cleaning device 100 to rotate by the second angle δ1 and then execute the obstacle searching operation, it is beneficial to the increase of the possibility that the first detector can sense the obstacle 200 after the cleaning device 100 collides with the obstacle 200 again. In the same way, it can increase the probability that the second detector senses the obstacle 200, thereby improving the efficiency of the cleaning device 100 to execute the operation of travelling along the obstacle.

It can be understood that after the cleaning device 100 moves backward by the first preset distance D01, rotates by the second preset angle δ1 to the side distal from the second detector, and finds the obstacle 200 by executing the obstacle searching operation, if the control system still cannot acquire the first detection information, that is, the first detector still cannot sense the obstacle 200, as shown in FIGs. 5d and 5e, the cleaning device 100 may execute the obstacle searching operation after the cleaning device 100 is controlled to move backward again by a third preset distance D02 and rotate by a third preset angle δ2 to the side distal from the detector.

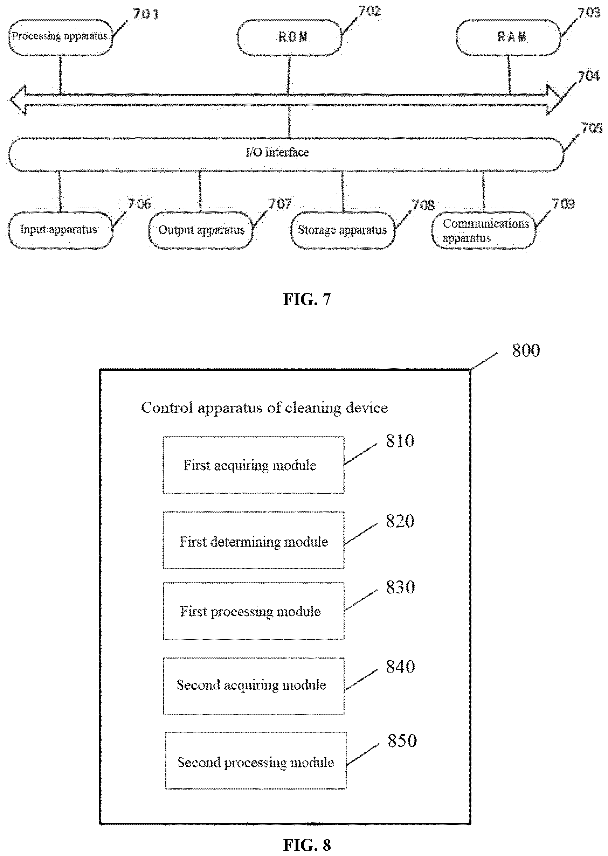

As shown in FIG. 8, according to embodiments of a second aspect of the present disclosure, an apparatus 800 for controlling a cleaning device is provided. The cleaning device includes a device body, and a trigger, a first detector and a second detector which are arranged on the device body, wherein the trigger is triggered when the cleaning device collides with an obstacle, the first detector is configured to sense an obstacle at the periphery of the device body, and the second detector is arranged on a side of the device body, and configured to sense an obstacle at the side of the device body. The control apparatus includes:
a first acquiring module 810, configured to acquire first detection information of the first detector based on the trigger being triggered; a first determining module 820, configured to determine a first movement distance at least based on the acquired first detection information; a first processing module 830, configured to, after controlling the cleaning device to move backward for the first movement distance, execute a first obstacle approaching operation according to the first detection information; a second acquiring module 840, configured to acquire second detection information of the second detector; and a second processing module 850, configured to control the cleaning device to execute an operation of travelling along the obstacle according to the second detection information.

In the control apparatus 800 of the cleaning device provided by the present disclosure, after the cleaning device collides with the obstacle in the advancing process and the action of the trigger is triggered, the position of the obstacle 200 relative to the cleaning device 100 can be known. Further, the first movement distance can be determined by acquiring, by the first acquiring module 810, the first detection information of the first detector, and then, the first processing module 830 controls the cleaning device to move backward for the first movement distance, such that the cleaning device is separated from the obstacle, thereby ensuring the smooth movement of the cleaning device. Then, according to the difference pieces of the first detection information, the first processing module 830 executes different first obstacle approaching operations, such that the re-collision times of the cleaning device with the obstacle can be reduced as much as possible. Meanwhile, the second detector can sense the obstacle, the second acquiring module 840 can acquire the second detection information, and the second processing module 850 can control the cleaning device to execute the operation of travelling along the obstacle according to the second detection information, such that the cleaning device can quickly travel along the obstacle. Thus, the problem of missing sweeping of the part of the ground adjacent to the wall is reduced, thereby greatly improving the cleaning efficiency, and ensuring an excellent cleaning effect.

As an example, the first detection information at least includes: a first included angle between the device body and the obstacle, a vertical distance between the device body and the obstacle, and a horizontal distance between the device body and a target end of the obstacle. The target end of the obstacle is located in front of the cleaning device at a side distal from the second detector. The first determining module 820 includes: a first determining unit, configured to determine the first movement distance according to the first included angle, the vertical distance between the device body and the obstacle, and the horizontal distance between the device body and the target end of the obstacle.

As an example, the first processing module 830 includes: a second determining unit, configured to determine a first rotation angle according to the first included angle; a first processing unit, configured to control the cleaning device to rotate by the first rotation angle to a side distal from the second detector; and a second processing unit, configured to control the cleaning device to move forward according to the horizontal distance between the device body and the target end of the obstacle.

As an example, the second processing unit includes: a first processing subunit, configured to control the cleaning device to move forward based on the horizontal distance between the device body and the target end of the obstacle being greater than or equal to a preset value; a first acquiring submodule, configured to acquire a second included angle between the device body at a current position and the obstacle based on the trigger being triggered again; a first determining subunit, configured to determine a second rotation angle according to the second included angle; and a second processing subunit, configured to control the cleaning device to rotate by the second rotation angle to the side distal from the second detector.

As an example, the first determining subunit is specifically configured to: determine the second rotation angle according to the second included angle and a set position of the second detector relative to the device body.

As an example, the second processing unit includes: a third processing subunit, configured to, based on the horizontal distance between the device body and the target end of the obstacle being less than a preset value, control the cleaning device to move to the side distal from the second detector at a first linear speed and a first angular speed, and control the cleaning device to execute an obstacle searching operation if the trigger is not triggered when a preset duration is reached.

As an example, the apparatus 800 for controlling the cleaning device further includes: a third processing module, configured to control the cleaning device to move backward by a first preset distance based on that the first detection information is not acquired, and execute an obstacle searching operation after the cleaning device is rotated by a second preset angle to the side distal from the second detector.

As an example, the obstacle searching operation includes: controlling the cleaning device to move and rotate to a direction where the second detector is arranged at an obstacle searching linear speed and an obstacle searching angular speed until the trigger is triggered.

A cleaning device is provided by embodiments of the present disclosure, and includes: a processor and a memory, wherein the memory stores a computer program instruction executable by the processor; and the processor, when executing the computer program instruction, implements steps of the method for controlling the cleaning device according to any one of the embodiments.

As shown in FIG. 7, the cleaning device may include a processing apparatus 701 (such as a central processing unit, a graphics processing unit, or the like) that may execute various appropriate actions and processing according to a program stored in a read-only memory (ROM 702) or a program loaded from a storage apparatus 708 into a random-access memory (RAM 703). In the RAM 703, various programs and data required for operation of the electronic robot are further stored. The processing apparatus 701, the ROM 702, and the RAM 703 are connected to one another via a bus 704. An input/output (I/O) interface is also connected to the bus 704.

Generally, the following apparatuses may be connected to the I/O interface 705: input apparatuses 706 including, for example, a touchscreen, a touchpad, a keyboard, a mouse, a camera, a microphone and a sensing apparatus; output apparatuses 707 including, for example, a liquid crystal display (LCD), a loudspeaker and a vibrator; storage apparatuses 708 including, for example, a hard disk; and a communications apparatus 709. The communications apparatus 709 may allow the cleaning robot to communicate wirelessly or wiredly with another base station to exchange data. For example, the communications apparatus 709 may implement communication between the cleaning robot and the base station or a remote mobile device. Although FIG. 7 shows a cleaning device with various apparatuses, it should be understood that it is not required to implement or provide all shown apparatuses. Alternatively, more or fewer apparatuses may be implemented or provided.

In particular, according to the embodiments of the present disclosure, the process described above with reference to the flowchart may be implemented as a robot software program. For example, an embodiment of the present disclosure includes a robot software program product that includes a computer program carried on a readable medium, and the computer program includes program codes for executing the method shown in the flowchart of FIG. 6. In such an embodiment, the computer program may be downloaded and installed from a network by means of the communications apparatus 709, installed from the storage apparatus 708, or installed from the ROM 702. When the computer program is executed by the processing apparatus 701, the foregoing functions defined in the method in the embodiments of the present disclosure are executed.

It should be noted that the foregoing computer-readable medium in the present disclosure may be a computer-readable signal medium, a computer-readable storage medium, or any combination of the two. The computer-readable storage medium may be, for example, but is not limited to an electrical, magnetic, optical, electromagnetic, infrared, or semiconductor system, apparatus, or device, or any combination thereof. More specific examples of the computer-readable storage medium may include but are not limited to: an electrical connection having one or more conducting wires, a portable computer disk, a hard disk, a random-access memory (RAM 703), a read-only memory (ROM 702), an erasable programmable read-only memory (EPROM 702 or flash memory), an optical fiber, a portable compact disk read-only memory (CD-ROM 702), an optical storage device, a magnetic storage device, or any suitable combination thereof. In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or device. The program code included in the computer-readable medium may be transmitted by using any suitable medium, including but not limited to: a wire, an optical cable, a radio frequency (RF) and the like, or any suitable combination thereof.

The above computer-readable medium may be included in the robot, or may exist separately and not be installed into the robot.

Computer program codes for executing the operations of the present disclosure may be written in one or more programming languages or a combination thereof, such as object-oriented programming languages Java, Smalltalk, C++, and conventional procedural programming languages such as "C" or similar program design languages. The program codes may be executed completely on a user computer, partially on a user computer, as an independent software package, partially on a user computer and partially on a remote computer, or completely on a remote computer or server.

In cases involving a remote computer, the remote computer may be connected to a user computer through any type of network, including a local area network (LAN) or a wide area network (WAN), or may be connected to an external computer (for example, through the Internet by using an Internet service provider).

Flowcharts and block diagrams in the accompanying drawings illustrate possible implementation system architecture, functions, and operations of systems, methods, and computer program products according to various embodiments of the present disclosure. In this regard, each block in a flowchart or block diagram may represent a module, program segment, or part of a code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that executes a specified function or operation, or may be implemented by using a combination of dedicated hardware and a computer instruction.

A cleaning device for rebounding of a front bumper is further provided by the present disclosure.

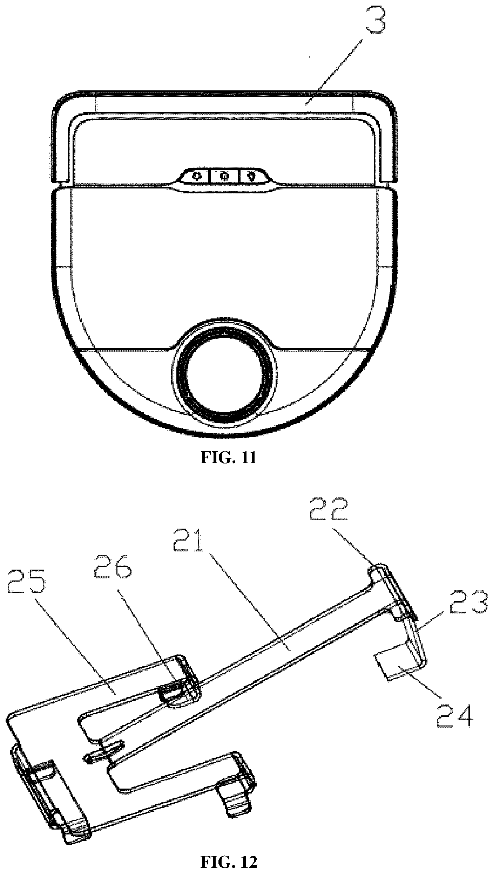

FIG. 11 shows a top view of a cleaning device for rebounding of a front bumper. The cleaning device is wholly divided into two parts: a front part and a rear part. The front part is in a generally rectangular/square configuration, and the front bumper 3 is arranged on the outer side of the square configuration of the cleaning device. The front bumper 3 is divided into a front part straight line segment and side part straight line segments; junctions of the front part straight line segment and the side part straight line segments on two sides form roughly rounded corners; and the shape of the front part of a frame of the cleaning device corresponds to the shape of the front bumper 3. It can be understood that in a travelling process of the cleaning device, when the front part of the cleaning device is collided, the front bumper 3 will move relative to the frame in a direction perpendicular to the front part straight line segment of the cleaning device; and when one side part is collided, the front bumper 3 will move relative to the frame in a direction perpendicular to the side part straight line segment of the cleaning device. The rear part of the cleaning device is in a substantially circular configuration. The advantage of this arrangement is that a cleaning component is arranged at the bottom of the frame of the square configuration of the front part of the cleaning device. The cleaning component may basically span the width of the front part and be closer to the front part of the cleaning device in the traveling direction, such that a corner can be cleaned more effectively in a process of cleaning a surface to be cleaned.

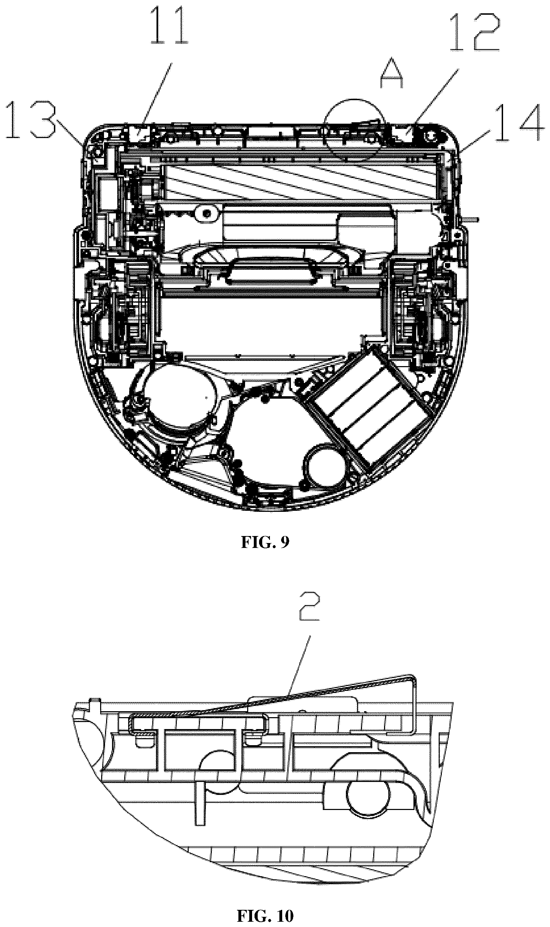

In FIG. 9, the front part and the side parts of the frame of the cleaning device each are provided with at least one collision sensor, which can respond to the collision of the cleaning device in the traveling process and transmit response data or signals to a control unit. The control unit further controls driving wheels and a cleaning unit of the cleaning device to achieve the purpose of obstacle avoidance or sweeping characteristic change. The obstacle avoidance may be an operation of bypassing or being distal from an obstacle, and the cleaning characteristic change may be changing a working mode of a cleaning unit (a side brush, a main brush, a mopping part, power of a dust suction fan, etc.). Of course, the collision sensors may also be arranged on the inner wall and/or side wall of the front end of the front bumper, and have a working mode the same as that of the collision sensors arranged on the frame described above, except that a line is also involved in the actual design. Arranging the collision sensors on the frame is beneficial to the arrangement of the line. Therefore, in this embodiment, arranging all the collision sensors on the frame is taken as an example for description.

In order to achieve optimal sensing of the obstacle, two front part collision sensors may be symmetrically arranged at the front part, and one side part collision sensor may be arranged on each side part, namely, a first front part collision sensor 11, a second front part collision sensor 12, a first side part collision sensor 13 and a second side part collision sensor 14 as shown in FIG. 9. Of course, the specific setting mode is not limited to the positions and numbers described in this embodiment, which is not specifically limited in the present embodiment.

In the light of the above arrangement, when the front part straight line segment of the front bumper 3 collides with the obstacle, the front bumper 3 moves relative to the frame in the direction perpendicular to the front part straight line segment; and after the front bumper 3 moves by a certain distance, the two collision sensors arranged at the front part will be triggered. It can be understood that, in the process of collision, the front bumper 3 does not move strictly in the direction perpendicular to the front part straight line segment, the movement of the front bumper 3 in this direction will be tortuous to some extent according to different collision positions, and this tortuousness is understandable. For example, when the collision directly faces the position of one of the collision sensors, the corresponding position on the front bumper 3 is directly forced to move relative to the frame, thereby driving the front bumper 3 to wholly move relative to the frame. That is, the movement of the front bumper 3 is caused by a fact that a collision point, squeezed by an external collision object, is moved to drive other points on the front bumper 3 distal from this point to follow the movement and displacement. In this case, the collision sensor closer to the collision point will be triggered before other collision sensors distal from the collision point. Based on this principle, a specific point position where the collision occurs may also be determined from a triggering sequence or triggering time points of the multiple sensors. However, since the side part straight line segment is shorter than the front part straight line segment, only one collision sensor on the side can meet the requirements, and of course, the number and position thereof are not limited.

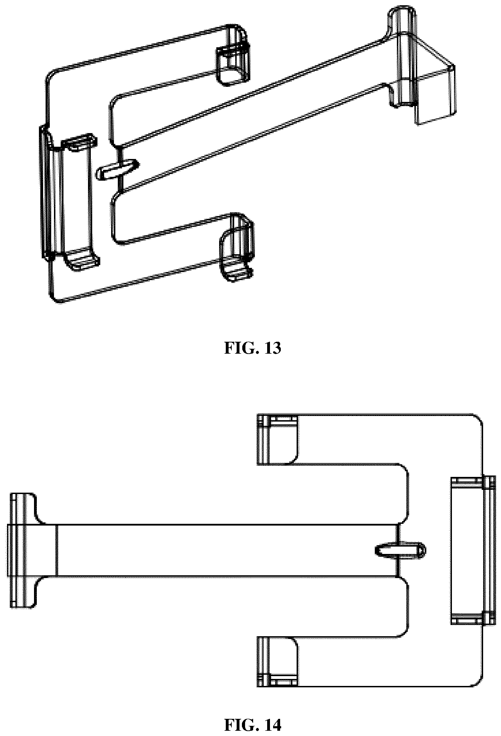

The front bumper 3 needs to return to its original position after being collided and moving relative to the frame, so as to cope with a next collision. Therefore, a plurality of rebounding members or restoration mechanisms is arranged on the frame to achieve the restoration of the front bumper 3. However, for the special-shaped cleaning device as described in the present embodiment, especially the cleaning device with the front part having a square structure, it is required to effectively align the front bumper 3 during the restoration. Of course, the rebounding member may also be arranged on the inner wall of the front bumper, but due to the space limitation, arranging the rebounding member on the frame is taken for detailed description in the present embodiment, without excluding the way of arranging the rebounding member on the front bumper. As shown in FIG. 10, the rebounding member 2 is arranged on the frame, and includes various parts as shown in FIGs. 13 to 15, namely, an elastic arm 21, and a restoring arm 23 and fixed arms 25 arranged at two ends of the elastic arm 21, respectively, wherein the elastic arm 21 intersects with the restoring arm 23 at an acute angle; and a restoring hook 24 arranged at the other end of the restoring arm 23 and a fixed hook 26 arranged at one end of each fixed arm 25, wherein a contact portion 22 is formed at a junction of the elastic arm 21 and the restoring arm 23.

The frame is provided with a structure corresponding to the fixed arms 25 and the fixed hooks 26. In order to more stably fix the rebounding member 1 to the frame, there are two fixed arms 25 which are symmetrically arranged in parallel with each other relative to the elastic arm 21. The fixed hooks 26 hook the corresponding structure on the frame, so as to limit the rebounding member 2 from moving relative to the frame in the moving direction of the elastic arm 21. That is, the rebounding member is fixedly connected to the frame by means of the fixed arms 25, the fixed hooks 26 and the corresponding fixed structure on the frame.

The restoring hook 24 may limit a rebound stroke of the elastic arm 21 by means of a structure correspondingly arranged on the frame. When the elastic arm 21 is elastically deformed by the squeezing from the front bumper 3, the restoring arm 23 drives the restoring hook 24 to move in the squeezing direction. In this case, the corresponding structure inside the frame does not limit the movement of the restoring arm 23 and the restoring hook 24. But when the squeezing of the front bumper 3 disappears and the elastic arm 21 rebounds to the initial position, the restoring hook 24 is stuck by the corresponding structure on the frame, such that the restoring hook 24 cannot move beyond the initial position. This initial position is set to limit the rebounding position of the elastic arm 21. At the initial position, the front bumper 3 is in a natural state, namely, a state without any collision. A certain preset gap exists between the contact portion 22 and the inner wall of the front bumper 3, and may be set to, for example, 0.3 mm to 2 mm. Therefore, in an initial stage of frontal collision of the front bumper 3, the inner wall of the front bumper 3 needs to move at least the above preset gap before being in contact with the contact portion 22, and then, the elastic arm 21 is elastically deformed; and further, the restoring arm 23 drives the restoring hook 24 to be distal from the initial position until the frontal collision disappears, and the front bumper 3 is restored by the elastic arm 21. Due to the set preset gap, the side part collision sensor is triggered when the side of the front bumper 3 is collided, but the inner wall of the front part of the front bumper 3 will not be in contact with the contact portion 22 in the whole process that the side is collided. In other words, the rebounding member 2 will not have any influence on the front bumper 3 when only the side of the front bumper 3 is collided. It is precisely because there is no influence of the rebounding member 2 on the front bumper 3, the side collision of the front bumper 3 can be fed back more accurately.

As mentioned above, the front bumper 3 has two roughly rounded corners. When the collision occurs in a rounded corner region, for example, when the front bumper is configured to perform the action of moving along the wall, the collision sensors at the front part and side parts of the frame may all be triggered. In this case, due to the above set preset gap, the lateral displacement of the front bumper 3 will not be affected by the rebounding member 2 at the initial stage until the contact portion 22 is in contact with the inner wall of the front bumper 3. Although the subsequent lateral displacement will be more or less affected by friction between the contact portion 22 and the inner wall of the front bumper 3, the collision sensors at the side parts may have been triggered in this case, which further reduces an affecting factor of the friction.

In addition to the rebounding of the rebounding member 2 to the front bumper 3 in the vertical direction of the front part straight line segment, another rebound aligning part is additionally arranged on a side of the front part of the frame, and can actively restore the lateral movement of the front bumper 3 and align the lateral return of the front bumper 3, wherein a specific arrangement form thereof is recorded in other patent applications, and will not be repeated herein.

In order to optimize a mutual effect between the front bumper 3 and the collision sensors and between the front bumper 3 and the rebounding members 2, it is chosen to symmetrically arrange the two rebounding members 2 on the front part straight line segment of the frame in the present disclosure, and the two rebounding members 2 are further distal from the two rounded corners than the first and second collision sensors at the front part. That is, the distance between the two rebounding members 2 is shorter than that between the two collision sensors. In addition, the two front part collision sensors and the collision sensors on the two sides are all close to or located in the rounded corner region. This is beneficial to feedback of the collision in the corner region more accurately, because the frontal collision of the front part or the side parts is not too sensitive to specific positions of the sensors, but the collision in the corner region requires more calculation and processing steps due to the complexity of an angle and size of an external collision, this arrangement can simplify the subsequent processing flow of the control system to some extent and increase the processing speed.

Compared with the prior art, the embodiments of the present disclosure have the following technical effects. The frame of the cleaning device provided by the present disclosure is provided with the rebounding member which is not in contact with the front bumper when the front bumper is in a natural state. When only the left and right sides of the front bumper are forced, the certain gap is kept between the rebounding member and the front bumper, such that it is ensured that the rebounding member will not interfere with the lateral displacement of the front bumper when the front bumper is in left-right lateral displacement, without affecting the triggering sensitivity of the collision sensors on the left and right sides of the frame, which is also beneficial to more accurate rebounding alignment of the front bumper after displacement.

The apparatus embodiments described above are only schematic, in which the units described as separate components may or may not be physically separated, and the components displayed as units may or may not be physical units, that is, they may be located in one place or distributed to multiple network units. Some or all of the modules may be selected according to actual needs to achieve the purpose of the present embodiment. It can be understood and implemented by those of ordinary skill in the art without creative labor.

Finally, it should be explained that the above embodiments are only used to illustrate the technical solutions of the present disclosure and are not intended to limit the present invention. Although the present disclosure has been described in detail with reference to the foregoing embodiments, those of ordinary skill in the art should understand that: they can still make modifications to the technical solutions described in the foregoing embodiments, or make equivalent substitutions to some of the technical features; and these modifications or substitutions do not deviate the nature of the corresponding technical solutions from the spirit and scope of the technical solutions of the various embodiments of the present disclosure.

## Claims

1. A method for controlling a cleaning device, wherein the cleaning device comprises a device body, a trigger, a first detector and a second detector, and the trigger, the first detector and the second detector are arranged on the device body, wherein the trigger is triggered when the cleaning device collides with an obstacle, the first detector is configured to sense an obstacle at a periphery of the device body, and the second detector is arranged on a side of the device body, and configured to sense the obstacle at the side of the device body; and the control method comprises:
acquiring first detection information of the first detector in response to the trigger being triggered,
determining a first movement distance at least in response to the acquired first detection information,
after controlling the cleaning device to move backward for the first movement distance, executing a first obstacle approaching operation according to the first detection information,
acquiring second detection information of the second detector, and
controlling the cleaning device to execute an operation of travelling along the obstacle according to the second detection information.

2. The method for controlling the cleaning device according to claim 1, wherein
the first detection information at least comprises: a first included angle between the device body and the obstacle, a vertical distance between the device body and the obstacle, and a horizontal distance between the device body and a target end of the obstacle; and the target end of the obstacle is located in front of the cleaning device at a side distal from the second detector.

3. The method for controlling the cleaning device according to claim 2, wherein controlling the cleaning device to execute the operation of travelling along the obstacle according to the second detection information comprises:
determining a first rotation angle according to the first included angle;
controlling the cleaning device to rotate by the first rotation angle to a side distal from the second detector; and
controlling the cleaning device to move forward according to the horizontal distance between the device body and the target end of the obstacle.

4. The method for controlling the cleaning device according to claim 3, wherein controlling the cleaning device to move forward according to the horizontal distance between the device body and the target end of the obstacle comprises:
controlling the cleaning device to move forward in response to the horizontal distance between the device body and the target end of the obstacle being greater than or equal to a preset value;
acquiring a second included angle between the device body at a current position and the obstacle in response to the trigger being triggered again;
determining a second rotation angle according to the second included angle; and
controlling the cleaning device to rotate by the second rotation angle to the side distal from the second detector.

5. The method for controlling the cleaning device according to claim 4, wherein determining the second rotation angle according to the second included angle specifically comprises:
determining the second rotation angle according to the second included angle and a set position of the second detector relative to the device body.

6. The method for controlling the cleaning device according to claim 3, wherein controlling the cleaning device to move forward according to the horizontal distance between the target end of the obstacle and the device body comprises:
controlling the cleaning device to move to the side distal from the second detector at a first linear speed and a first angular speed in response to the horizontal distance between the device body and the target end of the obstacle being less than a preset value, and if the trigger is not triggered when a preset duration is reached, controlling the cleaning device to execute an obstacle searching operation.

7. The method for controlling the cleaning device according to any one of claims 1 to 6, further comprising:
controlling the cleaning device to move backward by a first preset distance in response to that the first detection information is not acquired, and
executing an obstacle searching operation after the cleaning device is rotated by a second preset angle to a side distal from the second detector.

8. The method for controlling the cleaning device according to claim 7, wherein the obstacle searching operation comprises:
controlling the cleaning device to move and rotate to a direction where the second detector is arranged at an obstacle searching linear speed and an obstacle searching angular speed until the trigger is triggered.

9. An apparatus for controlling a cleaning device, wherein the cleaning device comprises a device body, and a trigger, a first detector and a second detector which are arranged on the device body, wherein the trigger is triggered when the cleaning device collides with an obstacle, the first detector is configured to sense an obstacle at a periphery of the device body, and the second detector is arranged on a side of the device body, and configured to sense the obstacle at the side of the device body; and the control apparatus comprises:
a first acquiring module, configured to acquire first detection information of the first detector in response to the trigger being triggered,
a first determining module, configured to determine a first movement distance at least in response to the acquired first detection information,
a first processing module, configured to, after controlling the cleaning device to move backward for the first movement distance, execute a first obstacle approaching operation according to the first detection information,
a second acquiring module, configured to acquire second detection information of the second detector, and
a second processing module, configured to control the cleaning device to execute an operation of travelling along the obstacle according to the second detection information.

10. The apparatus for controlling the cleaning device according to claim 9, wherein
the first detection information at least comprises: a first included angle between the device body and the obstacle, a vertical distance between the device body and the obstacle, and a horizontal distance between the device body and a target end of the obstacle, and the target end of the obstacle is located in front of the cleaning device at a side distal from the second detector, wherein the first determining module comprises:
a first determining unit, configured to determine the first movement distance according to the first included angle, the vertical distance between the device body and the obstacle, and the horizontal distance between the device body and the target end of the obstacle.

11. The apparatus for controlling the cleaning device according to claim 10, wherein the first processing module comprises:
a second determining unit, configured to determine a first rotation angle according to the first included angle;
a first processing unit, configured to control the cleaning device to rotate by the first rotation angle to a side distal from the second detector; and
a second processing unit, configured to control the cleaning device to move forward according to the horizontal distance between the device body and the target end of the obstacle.

12. The apparatus for controlling the cleaning device according to claim 11, wherein the second processing unit comprises:
a first processing subunit, configured to control the cleaning device to move forward in response to the horizontal distance between the device body and the target end of the obstacle being greater than or equal to a preset value;
a first acquiring submodule, configured to acquire a second included angle between the device body at a current position and the obstacle in response to the trigger being triggered again;
a first determining subunit, configured to determine a second rotation angle according to the second included angle; and
a second processing subunit, configured to control the cleaning device to rotate by the second rotation angle to the side distal from the second detector.

13. The apparatus for controlling the cleaning device according to claim 12, wherein the first determining subunit is configured to:
determine the second rotation angle according to the second included angle and a set position of the second detector relative to the device body.

14. The apparatus for controlling the cleaning device according to claim 11, wherein the second processing unit comprises:
a third processing subunit, configured to, control the cleaning device to move to the side distal from the second detector at a first linear speed and a first angular speed in response to the horizontal distance between the device body and the target end of the obstacle being less than a preset value, and if the trigger is not triggered when a preset duration is reached, control the cleaning device to execute an obstacle searching operation.

15. The apparatus for controlling the cleaning device according to any one of claims 9 to 14, further comprising:
a third processing module, configured to control the cleaning device to move backward by a first preset distance in response to that the first detection information is not acquired, and execute an obstacle searching operation after the cleaning device is rotated by a second preset angle to a side distal from the second detector.

16. The apparatus for controlling the cleaning device according to claim 15, wherein the obstacle searching operation comprises:
controlling the cleaning device to move and rotate to a direction where the second detector is arranged at an obstacle searching linear speed and an obstacle searching angular speed until the trigger is triggered.

17. A cleaning robot, comprising a processor and a memory, wherein
the memory is configured to store an operation instruction; and
the processor is configured to execute the method for controlling the cleaning device according to any one of claims 1 to 8 by calling the operation instruction.

18. A computer-readable storage medium storing a computer program thereon, wherein the program, when executed by a processor, implements the method for controlling the cleaning device according to any one of claims 1 to 8.
